**Europäisches Patentamt**

**European Patent Office**

**Office européen des brevets**

(19)

(11) Veröffentlichungsnummer : **0 385 262 B1**

(12)

# EUROPÄISCHE PATENTSCHRIFT

(45) Veröffentlichungstag der Patentschrift :
**23.08.95 Patentblatt 95/34**

(51) Int. Cl.⁶ : **G02B 21/10, G02B 21/06**

(21) Anmeldenummer : **90103403.3**

(22) Anmeldetag : **22.02.90**

(54) **Beobachtungsgerät mit Auflicht-Beleuchtungseinrichtung.**

(30) Priorität : **02.03.89 DE 3906555**

(43) Veröffentlichungstag der Anmeldung :
**05.09.90 Patentblatt 90/36**

(45) Bekanntmachung des Hinweises auf die
Patenterteilung :
**23.08.95 Patentblatt 95/34**

(84) Benannte Vertragsstaaten :
**CH DE GB IT LI NL SE**

(56) Entgegenhaltungen :
**WO-A-87/07381
DE-A- 3 734 691
DE-C- 542 371
US-A- 4 645 348
US-A- 4 974 094**

(56) Entgegenhaltungen :
**FUNKSCHAU, Nr. 20, Oktober 1981, Seiten
57-60, München, DE; B. HILL et
al.:"Speichernde Lichtsteuer- und Display-
Komponenten"**

(73) Patentinhaber : **Firma Carl Zeiss
D-73446 Oberkochen (DE)**
(84) **CH DE IT LI NL SE**
Patentinhaber : **CARL ZEISS-STIFTUNG
HANDELND ALS CARL ZEISS
D-89518 Heidenheim (Brenz) (DE)**
(84) **GB**

(72) Erfinder : **Koch, Klaus-Peter, Dr.
Himmlinger Weg 50
D-7080 Aalen (DE)**
Erfinder : **Prinz, Reinhard
Walkstrasse 84
D-7080 Aalen (DE)**

## Beschreibung

Die Erfindung betrifft ein Beobachtungsgerät mit einer Auflicht-Beleuchtungseinrichtung nach Anspruch 1.

Die Beleuchtung unter einem Lichteinfallswinkel führt bei drei-dimensionalen Objekten zu einer Schattenbildung und damit zu einer deutlichen Kontrasterhöhung bei einer Beobachtung.

Aus der DE-PS 28 52 203 ist eine Beleuchtungseinrichtung bekannt, bei welcher im Objektivtubus symmetrisch um die optische Achse in einem äußeren, ringförmigen Bereich ein ebener Haltering mit Lichtleiterendflächen vorhanden ist, aus welchem das Licht parallel zur optischen Achse austritt. Dieser Haltering ist im Tubus verschiebbar, so daß der Lichteinfallwinkel durch eine Bewegung des Halteringes verändert werden kann. Nachteilig bei dieser Einrichtung ist die Notwendigkeit zur mechanischen Verstellung des Halteringes, um eine Änderung des Bestrahlungswinkels zu erhalten. Die innere Anordnung der Lichtleiterendflächen macht eine sehr große Okularlinse notwendig und führt außerdem zur Streulichterzeugung im Tubus. Störend ist auch die Verwendung der vielen Lichtleiter, welche von außen herangeführt und deren Enden sehr genau bearbeitet werden müssen.

Eine ringförmige Beleuchtung für ein Ophthalmometer ist aus der US-PS 46 66 269 bekannt, bei welcher eine aus mehreren konzentrischen Ringen aufgebaute Zylinderlinse auf ihrer Rückseite im rückwärtigen Fokus eine Vielzahl kreisförmiger Öffnungen besitzt und das Licht einer Lichtquelle, welche aus einer Vielzahl kleiner Lichtquellen bestehen kann, in parallelen Strahlen auf ein Auge lenkt, wobei die Mittelpunktsstrahlen sich auf einem Punkt der optischen Achse treffen. Nachteilig ist an dieser Beleuchtung, daß keine Auswahl von verschiedenen Beleuchtungswinkeln oder -sektoren erfolgen kann, da das ungerichtete Licht der Lichtquelle durch feste Blenden in die Linse eintritt.

Aus der US-PS 45 67 551 ist eine Beleuchtungseinrichtung bekannt, bei welcher das Licht jeweils einer Lichtquelle über einen Winkelspiegel, welcher außerhalb der Objektivfassung angebracht ist, auf eine Zonenplatte umgelenkt wird. Die Zonenplatte fokussiert dabei das Licht in einen Bereich um die optische Achse. Bei dieser Einrichtung ist es nachteilig, daß das Licht von außen eingestrahlt wird und keine Auswahl der Beleuchtungswinkel erfolgen kann.

Eine Beleuchtungseinrichtung, bei welcher das Licht vieler Lichtquellen, wahlweise auch auf Sektoren begrenzt, in einem Ring um die optische Achse eines Objektivs außerhalb der Objektivfassung parallel zur optischen Achse über zwei Ringspiegel in eine Objektebene auf einen Bereich um die optische Achse fokussiert wird, ist aus der EP-PS 02 23 556 bekannt. Durch eine mechanische Verstellung eines der beiden Ringspiegels ist eine Änderung des Beleuchtungswinkels möglich. Der wesentliche Nachteil dieser Einrichtung besteht in der Notwendigkeit einer mechanischen Verstellung, um eine Änderung des Beleuchtungswinkels zu erhalten. Die sehr aufwendig zu bearbeitenden Spiegelflächen ist eine weitere nachteilige Eigenschaft dieser Beleuchtungseinrichtung.

Aus der DE-OS 37 34 691 ist eine Beleuchtungsvorrichtung für ein Mikroskop bekannt, bei welcher zur Erzeugung einer Flächenlichtquelle eine Mehrzahl von Halbleiter-Lichtquellen in zwei Dimensionen, und damit in einer Ebene angeordnet sind. Eine Regelschaltung ist mit dieser Flächenlichtquelle verbunden und erlaubt in Verbindung mit der Auswahl des Beleuchtungsmodus das Aufleuchten ausgewählter Einzellichtquellen, bzw. Einzellichtquellenkombinationen. Bezüglich dieser Flächenlichtquelle ist ein optisches Beleuchtungssystem fluchtend angeordnet, welches das von der Flächenlichtquelle ausgehende Licht sammelt und von unten auf eine durchsichtige Probe lenkt. Der Nachteil dieser Einrichtung besteht darin, daß sie nur für Durchlicht und damit für durchsichtige Proben geeignet ist. Außerdem wird ein optisches Beleuchtungssystem benötigt, welches mit der Flächenlichtquelle fluchtend angeordnet ist. was zu einer sehr voluminösen Beleuchtungsvorrichtung führt.

Im "ABC der Optik" von Karl Mütze, Verlag Werner Dausien 1961 ist auf S. 561 eine Beleuchtungseinrichtung mit einem Lieberkühn-Spiegel zu sehen, wobei das um das Objekt eingestrahlte Licht durch den Spiegel auf einen Bereich um die optische Achse fokussiert wird. Die Lichteinstrahlung erfolgt dabei parallel zur optischen Achse.

Aufgabe der Erfindung ist es, ein Beobachtungsgerät mit einer Beleuchtungseinrichtung zu schaffen, welche sich zur Beleuchtung unter verschiedenen auswählbaren Beleuchtungswinkeln bei Auflicht eignet, ohne daß eine mechanische Verstellung von Lichtquellen oder Abbildungselementen erfolgen muß.

Die Aufgabe wird erfindungsgemäß durch den kennzeichnenden Teil des ersten Patentanspruchs gelöst.

Mit dieser Auflicht-Objektbeleuchtungseinrichtung ist eine optische Vermessung sehr schnell und unabhängig von Umwelteinflüssen (z.B. Fremdlicht) möglich. Die um die optische Achse in einem mindestens zweidimensionalen Array angeordneten Lichtquellen verhindern, daß die Wärmeentwicklung sich im Tubus negativ auswirkt. Es erfolgt eine Bestrahlung von oben, so daß das Anwendungsgebiet sämtliche dreidimensionale Objekte unabhängig von deren Transparenz umfaßt. Ohne motorische Verstellung kann eine variable Beleuchtung der Objekte mit wählbaren Beleuchtungswinkeln erfolgen. Die Ausrichtung der einzelnen Lichtquellen erfolgt so, daß sich die optischen Achsen der Lichtquellen in einem Punkt auf der optischen Achse der Beobachtungsoptik in der Objektebene treffen. Dadurch wird eine optimale Ausleuchtung des Objektes in dem von dem Objektiv des Beobachtungsgerätes erfaßten Objektbereich gewährleistet. Dies wird dadurch erleichtert, daß die optische Achse der Beobachtungsabbildungsoptik durch das geometrische Arrayzentrum geht.

Gemäß der Erfindung erhält man aus allen Beleuchtungseinrichtungen wählbare Beleuchtungsstärken bei frei wählbarer Änderung des Lichteinfallwinkels ohne eine mechanische Verstellung, da die Lichtquellen ihr Licht mit unterschiedlichen Strahlachsen abstrahlen. Dadurch erreicht man eine objektspezifisch steuerbare Beleuchtungsintensität für jede einzelne Lichtquelle und somit auch bei deren Kombination aus unterschiedlichen Beleuchtungsrichtungen, da die einzelnen Lichtquellen im zweidimensionalen Array eine unterschiedliche Entfernung vom geometrischen Arrayzentrum besitzen. Das Array der einzelnen Lichtquellen kann vorteilhaft so gestaltet sein, daß mehrere einzelne individuell oder kollektiv ansteuerbare Lichtquellen in mehreren konzentrischen Kreisen in unterschiedlichen Ebenen anordnet. Bei den Lichtquellen kann es sich um Selbstleuchter (Temperatur- oder Lumineszenzstrahler), aber auch um Glasfasern, Lichtleitstäbe oder um von hinten beleuchtete Blenden handeln (z.B. Miniaturhalogenlampen, Miniaturstratoskoplampen, ultrahelle Leuchtdioden usw).

In dem mindestens zweidimensionalen Array der Lichtquellen können mehrere diskret elektronisch ansteuerbare, räumliche Lichtmodulatoren vorhanden sein. Diese Lichtmodulatoren können in Miniaturprojektoren realisiert sein, und wahlweise ein bestimmtes Muster auf der Meßebene projizieren oder lediglich zur Beleuchtung der Szene beitragen.

Es ist vorteilhaft, mehrere dieser räumlichen Lichtmodulatoren innerhalb des Arrays symmetrisch zur optischen Achse des Abbildungssystems anzuordnen. Je nach Auswahl der Lichtmodulatoren können dabei die auf das Objekt abgebildeten Lichtstrukturen objektspezifisch gewählt werden.

Eine Steigerung der Wahlmöglichkeiten hinsichtlich der Beleuchtung erhält man, indem kreisförmig in unterschiedlichen Ebenen angeordneten Lichtquellen in mehrere Sektoren unterteilt werden und jeder Sektor separat schaltbar ist. Dies ermöglicht eine einseitige Beleuchtung und damit eine gezielte Schattenerzeugung. Um eine Einstellmöglichkeit der Beleuchtung auf unterschiedliche Objekte zu erhalten, ist die Lichtstärke der Lichtquellen regelbar. Damit ist eine unterschiedliche Beleuchtung aus verschiedenen Richtungen und mit unterschiedlichen Winkeln möglich. Diese Ausführung läßt sich zweckmäßig mit Miniaturhalogenlampen realisieren, denn diese Lampen erzeugen bei genügender Kleinheit ein weißes Licht. Dabei ist es vorteilhaft, wenn vor jeder Lichtquelle eine fokussierende Linse vorhanden ist, um eine hohe Leuchtdichte in einem begrenzten Bereich zu erhalten. Viele kommerziell erhältlichen Miniaturlichtquellen besitzen bereits eine integrierte Linse.

Um ein optisches Element zur Umlenkung des Lichtes auf den zu beleuchtenden Bereich zu vermeiden, können die Einzellichtquellen gleich in Bestrahlungsrichtung ausgerichtet sein. Als Befestigungskörper eignet sich hierzu ein halbkugelförmiger Träger, an welchem die Einzellichtquellen an der Innenseite befestigt sind. Dabei ist es vorteilhaft, wenn alle Einzellichtquellen von der Mitte des Leuchtfeldes den gleichen Abstand haben. Dies ermöglicht, daß alle Einzellichtquellen dieselbe fokussierende Linse besitzen. Man erhält einen gleichmäßigen Abstand der Einzellichtquellen vom Leuchtfeld, wenn der Mittelpunkt von dem Innenradius des Trägers in oder in der Nähe der Objektebene einer mit der Belichtungseinrichtung verbundenen Abbildungsoptik liegt. Da hierbei alle Strahlachsen der Einzellichtquellen senkrecht auf der Innenseite des Trägers auftreffen, ist eine einfache Montage der Einzellichtquellen an bzw. in dem Träger möglich. Die Form des halbkugelförmigen Trägers kann einer ganzen Halbkugel, einem Kugelabschnitt oder einer Kugelschicht entsprechen, je nach ausgesuchtem Winkelbereich für die Beleuchtung. Der Raum zwischen den Lichtquellen kann zum Zwecke der Belüftung und auch zur optischen Kontrolle durch das Bedienungspersonal unterbrochen sein, wodurch die Lichtquellen dann in Auslegern oder radähnlichen Konstruktionen untergebracht sind.

Das Trägermaterial kann hart sein oder aber sehr weich, wobei es im letzteren Fall durch Stützelemente an den Lichtquellen und durch Verbindungselementen zwischen den Stützelementen versteift wird. Ist das Trägermaterial weich, so besteht ein zusätzlicher Kollisionsschutz. Dieser ist insbesondere bei dem Einsatz an optischen Tastern für Koordinatenmeßgeräte sinnvoll.

Verwendet man Lichtquellen, welche ein spektral schmalbandiges Licht abgeben, so muß die Abbildungsoptik nur für diesen begrenzten Spektralbereich korrigiert werden. Zur Fremdlichtunterdrückung ist dann zusätzlich ein Interferenz-Bandpaß-Filter im Strahlengang der Abbildungsoptik sinnvoll, welches auf den Spektralbereich der Lichtquellen abgestimmt ist.

Da mit dieser Beleuchtungseinrichtung sich sehr viele Beleuchtungsarten wie diffuse Beleuchtung, raumwinkelselektive Hellfeld/Dunkelfeld-Beleuchtung und strukturierte Beleuchtung möglich sind, sind manuell und/oder vollautomatisch arbeitende Mittel zur Ansteuerung vorhanden. Eine manuelle Ansteuerung erfolgt durch ein mit der Beleuchtungseinrichtung verbundenes Bedienpult. In diesem Bedienpult sind sowohl Mittel zur Ansteuerung der Lichtquellen als auch Mittel zur Anzeige der eingeschalteten Lichtquellen enthalten. Dabei

3

erfolgt in einer Speichereinheit die Speicherung der ausgewählten Beleuchtungsart, welche auf einer Anzeigeeinrichtung angezeigt wird. Auf der Frontplatte der Eingabeeinheit erfolgt die Aktivierung der einzelnen Lichtquellen über Drucktaster. Diese sind entsprechend den Lichtquellen auf der Frontplatte angeordnet und verfügen über Leuchtdioden, die bei eingeschalteter Lichtquelle leuchten. Jede Lichtquelle kann in ihrer Leuchtstärke individuell eingestellt werden. Weitere Tasten ermöglichen eine Programmierung unterschiedlicher Beleuchtungseinstellungen.

Um meßergebnisverfälschende Objektoberflächeneigenschaften zu eliminieren, ist es vorteilhaft, daß die Ansteuerung und die Regelung der Lichtquellen und, falls vorhanden der Lichtstrukturprojektoren durch eine Bildverarbeitungsanlage im geschlossenen Regelkreis erfolgt, wobei die Bildverarbeitungsanlage vorteilhafterweise eine wissensbasierende ist. Dabei soll unter einer wissensbasierenden Bildverareitungsanlage eine Anlage verstanden werden, die es ermöglicht, entweder auf a-priori-Wissen zurückzugreifen (Templates) und-/oder mittels unterschiedlicher Algorithmen (Bildbeleuchtungsalgorithmen, Beleuchtungskombinationsalgorithmen usw.), welche wechselweise abgerufen werden können, eine objektspezifische Beleuchtung des Objektes einzustellen. Das a-priori-Wissen steht der Bildverarbeitungsanlage nach einer Teach-In-Prozedur oder von einer CAD-Anlage zur Verfügung, wobei sowohl die Objektszene als auch die dazugehörige Beleuchtungskonfiguration abgespeichert werden. Kommt man mittels der Tamplate nicht weiter oder liegen keine vor, so kann man eine optimale Beleuchtung auch mittels einer hierarchischen Suchmethode verschiedene Bildverarbeitungsalgorithmen und Beleuchtungseinstellungen (Beleuchtungsstärke, -richtungen) erreichen. Dadurch erhält die Bildverarbeitungsanlage auch eine gewisse Redundanzfähigkeit, so daß durch Vergleich zweier unterschiedlicher Beleuchtungseinstellungen z.B. Schattenkanten von Riefen unterschieden werden können.

Insbesondere durch eine Anordnung der Lichtquellen und Strukturprojektoren in Ebenen senkrecht zur optischen Achse erreicht man eine leichtere Anpaßbarkeit an verschiedene Bildverarbeitungsalgorithmen.

Die Lichtstrukturprojektoren eignen sich insbesondere auch zum Aufbau einer aktiven Autofokuseinrichtung. Dazu werden mindestens zwei Lichtprojektoren benötigt, die sich vorteilhafterweise auf gleicher Ebene senkrecht zur optischen Achse der Beobachtungsoptik gegenüberliegen. Durch diese Autofokuseinrichtung erhält man eine präzise z-Führungsgröße für ein z-Stellglied. Dies ist insbesondere beim Einsatz der Beleuchtungseinrichtung an einer Meßmaschine mit optischem Tastkopf wichtig.

Die Erfindung wird nachstehend in beispielhafterweise anhand von Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Es zeigen:

Fig. 1          eine ringförmige Beleuchtungseinrichtung unter Verwendung eines halbkugelförmigen Tragekörpers an einem Mikroskoptubus (oder an einem optischen Tastkopf für Koordinatenmeßgeräte);

Fig. 2a         eine Detailbetrachtung einer Halogen- Miniaturlampen-Befestigung;

Fig. 2b         zeigt eine Detailbetrachtung, wenn die Miniaturlampen durch Lichtleiter ersetzt werden,

Fig. 3a         eine Aufsicht auf die Beleuchtungseinrichtung von Fig. 1;

Fig. 3b         eine Aufsicht auf eine Beleuchtungseinrichtung an Speichen;

Fig. 4          eine Frontplatte einer Eingabeeinheit zur Ansteuerung der Einzellichtquellen nach Fig. 1;

Fig. 5          einen Prinzipaufbau eines Miniprojektors;

Fig. 6a-e       eine Erläuterung der Benutzung der Miniprojektoren zur Autofokussierung;

Fig. 7          eine vollautomatische Beleuchtungseinrichtung.

Fig. 7a         eine Anordnung der Beleuchtungslichtquellen in der Beleuchtungseinrichtung.

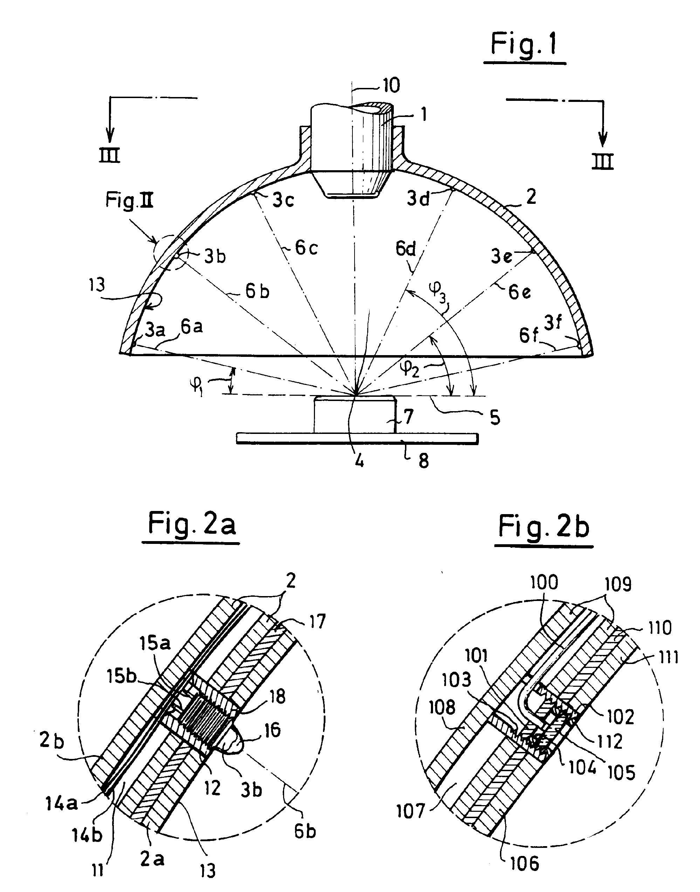

In Fig. 1 ist ein Schnitt durch den Tubus (1) eines Mikroskopes zu sehen, an welchem ein halbkreisförmiger Träger (2) einer Beleuchtungseinrichtung befestigt ist. Eine entsprechende Abbildung ist für einen optischen Tastkopf an einem Koordinatenmeßgerät denkbar, bei welchem der halbkreisförmige Träger der Beleuchtungsvorrichtung befestigt ist. Im Inneren des Trägers (2) sind viele Miniaturlampen (3) als Einzellichtquellen in konzentrischen Kreisen angebracht, wobei die Kreise in verschiedenen Ebenen angeordnet sind und aus jedem Kreis die Miniaturlampen unter einem definierten $\varphi$ - Wert abstrahlen. Die Form des Trägers (2) ist so gewählt, daß der Mittelpunkt (4) des Innenradius der Innenseite (13) in oder in der Nähe der Objektebene (5) der mit der Beleuchtungseinrichtung verbundenen Abbildungsoptik im Tubus (1) des Mikroskopes liegt. Die aus der Innenseite (13) des Trägers (2) herausragenden Miniaturlampen (3) sind so ausgerichtet, daß ihre Strahlachsen (6a-f) senkrecht zu der Innenseite (13) stehen. Die Beleuchtungseinrichtung ist richtig am Tubus (1) befestigt, wenn der Mittelpunkt (4) des Innenradius möglichst nahe am Schnittpunkt der optischen Achse (10) mit der Objektebene (5) liegt. Die Befestigung des Trägers (2) an den Tubus (1) kann dabei nach dem Stand der Technik frei gewählt werden, solange die Ausrichtung des Trägers (2) relativ zum Tubus (1) die Erfüllung dieser Forderung ermöglicht. Dann treffen sich die Strahlachsen (6a-f) in dem Mittelpunkt (4) auf der optischen Achse (10). Bei der Beobachtung eines Objektes (7) auf einem Objektträger (8) durch die Abbildungsoptik im Tubus (1) des Mikroskopes ist der Punkt (4) auf der optischen Achse (10) und ein Bereich um ihn herum optimal ausgeleuchtet. Der Bereich um den Mittelpunkt (4) ergibt sich aus den geometrischen Verhältnissen des Trägers (2) (Entfernung Miniaturlampen (3) zum Mittelpunkt (4)) in Bezug auf die Richtcharakteristik der Miniaturlampen (3) (Strahlungskegel der Miniaturlampen (3)). Die Richtcharakteristik der Miniaturlampen (3) wird durch eine fokussierende Linse (16 in Fig. 2) an den Miniaturlampen (3) festgelegt.

Indem nun bestimmte Miniaturlampen (3) leuchten und andere nicht, erhält man eine unterschiedliche Beleuchtung des Objektes (7) unter verschiedenen Winkeln ($\varphi$). Beleuchtet man das Objekt (7) nur mit einer Miniaturlampe (z.B. 3a), so wird das Objekt (7) nur von einer Seite unter einem Winkel ($\varphi_1$) bestrahlt. Es besteht aber auch die Möglichkeit, das Objekt (7) mit allen Miniaturlampen (3a und 3f) zu bestrahlen, welche in einem konzentrischen Kreis um die optische Achse (10) angeordnet sind. Je nach der Anzahl der Miniaturlampen (3) auf einem solchen Kreis kann man auch eine Bestrahlung aus mehreren verschiedenen Sektoren realisieren, indem eine vorgewählte Anzahl von nebeneinanderliegenden Miniaturlampen (3) gemeinsam das Objekt (7) bestrahlen.

Damit man die Beleuchtung den unterschiedlichen Oberflächenbeschaffenheit der Objekte (7) anpassen kann, ist die Lichtstärke jeder einzelnen Miniaturlampe (3) individuell regelbar. Die Miniaturlampen (3) können als Halogenlampen, LED's, usw. ausgebildet sein.

In Fig. 2a ist ein kleiner Bereich um eine Miniaturlampe (3b) vergrößert gezeigt. Man sieht, daß der Träger (2) aus einer inneren (2a) und einer äußeren (2b) Halbschale besteht. In der inneren Halbschale (2a) ist eine Lampenfassung (12) eingeschraubt, in welcher sich eine Miniatur-Halogenlampe (3b) als Einzellichtquelle befindet. Zwischen der inneren (2a) und der äußeren (2b) Halbschale befindet sich ein Hohlraum (11), in welchen die elektrischen Anschlüsse (15a,b) der Lampenfassung (12) hineinragen. Diese Anschlüsse (15a,b) sind mit den elektrischen Versorgungsleitungen (14a, b) verbunden.

Die Lampenfassung (12) ist senkrecht zur Innenseite (13) der inneren Halbschale (2a) ausgerichtet. Dies hat mehrere Vorteile. Fertigungstechnisch ist eine zu einer Fläche senkrecht stehende Bohrung für eine Lampenfassung (12) am leichtesten herzustellen. Aufgrund der gleichen Entfernung aller Miniaturlampen (3) zum Mittelpunkt (4) können alle Miniaturlampen (3) dieselbe fokussierende Linse (16) haben. Dadurch leuchten alle Miniaturlampen (3) unter allen Winkeln $\varphi_1 - \varphi_3$ fast den gleichen Bereich auf einem Objekt (7) aus (fast, da unterschiedliche Kegelschnitte der Strahlkegel auf dem Objekt (7) die Leuchtfelder bilden; die daraus resultierenden Unterschiede in der Beleuchtungsstärke können durch eine Regelung der Lichtstärke jeder einzelnen Miniaturlampe (3) gemeinsam mit den ferigungsbedingten Schwankungen der Lichtstärke der einzelnen Miniaturlampen (3) kompensiert werden).

Die Innenseite (13) der inneren Halbschale (2a) ist nicht verspiegelt, da eine Beleuchtung unter exakten Winkeln erfolgen soll, damit keine unerwünschten Reflexe vom Objekt auf dieses zurück reflektiert werden. Das Material des Trägers (2) selber ist sehr weich, um bei einem unbeabsichtigten Stoß an ein Objekt dieses möglichst nicht zu beschädigen. Damit der Träger (2) aber dennoch die nötige Festigkeit besitzt, sind die Lampenfassungen (12) in einen Ring (18) befestigt, dessen Material ausreichend fest ist. Untereinander sind diese Ringe (18) durch elastische Stäbe (17) aus demselben Material (z.B. aus Stahl oder Hartkunststoff) verbunden.

In Fig. 2b sind die Miniaturlampen (3) durch Lichtleiter (100) ersetzt. Der Träger (109) besteht auch hier aus einer inneren (106) und einer äußeren (108) Halbschale, wobei das Material des Trägers (109) sehr weich ist. Deshalb ist die innere Halbschale (106) durch elastische Stäbe (110) versteift, die die Ringe (102) für die Lichtleiterbefestigung miteinander verbinden. Diese Ringe (102) stützen auch die äußere Halbschale (108) ab, so daß sich zwischen den Halbschalen (106, 108) ein Hohlraum (107) befindet. In diesem Hohlraum (107) werden die Lichtleiter (100) zu den Ringen (102) geführt, welche für die Lichtleiter (100) eine Öffnung haben, so daß die Lichtleiter (100) in das Innere der Ringe (102) geführt werden können. Im Inneren der Ringe (102) befindet sich ein Innengewinde (103), in welches das Außengewinde eines Ausrichtelementes (101) für den Lichtleiter (100) eingeschraubt ist. Dieses Ausrichtelement (101) sorgt dafür, daß der Lichtleiter (100) senkrecht zur Innenseite (111) der inneren Halbschale (106) endet. Vor dem Lichtleiter (100) befindet sich eine fokussierende Linse (105), welche durch zwei Halteringe (104 und 112) zu beiden Seiten festgelegt ist. Diese fokussierende Linse (105) sorgt dafür, daß das aus dem Lichtleiter (100) austretende Licht in einem Bereich um die optische Achse in der Objektebene konzentriert wird.

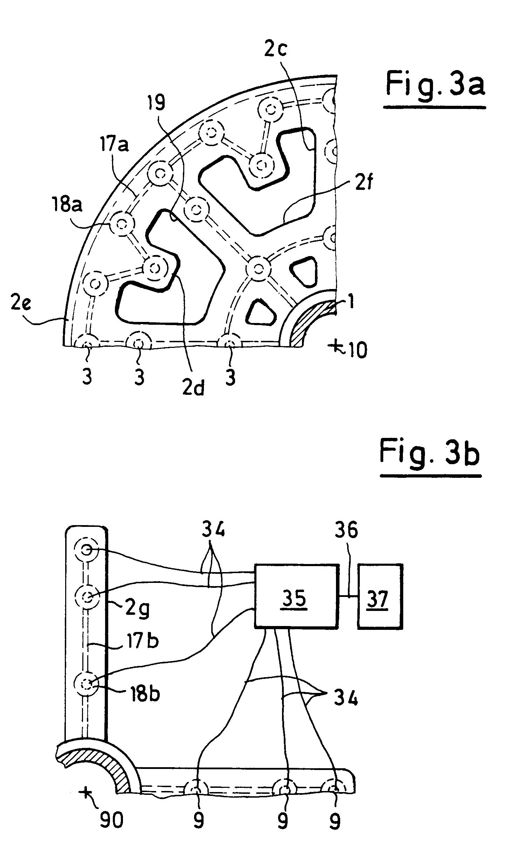

In Fig. 3a ist eine Aufsicht auf den Träger (2) aus Fig. 1 um den Mikroskoptubus (1) zu sehen. Der Träger (2) ist in der Art eines Rades aufgebaut und besitzt mehrere Speichen (2c), die durch Kreissegmente (2e, 2f) in unterschiedlicher Entfernung zum optischen Mittelpunkt verbunden sind. Außerdem sind noch Ausleger (2d) zwischen den Speichen (2c) vorhanden, welche in der konkreten Ausführung an den äußeren Kreissegmenten (2e) angebracht sind. Auf diesem Träger (2) sind nun die Miniaturlampen (3) in der aus Fig. 1 und Fig. 2 bekannten Art angebracht. Das Material des Trägers (2) ist sehr weich (z.B. Weichgummi), weshalb die Lampenfassungen (12) der Miniaturlampen (3) in einem Ring (18) aus festerem Material (z.B. Stahl, Hartkunststoff) befestigt sind. Diese einzelnen Ringe (18) sind untereinander mit Stäben (17) aus demselben Material verbunden, wobei diese Verbindung aus Stäben (17) so konzipiert ist, daß sie eine Verwindung des Trägers (2) erlaubt. Dadurch bleiben alle Vorzüge, die durch das weiche Material des Trägers (2) bestehen auch nach der Versteifung durch die Stäbe (17) bestehen.

Zwischen den einzelnen Teilen (2c, 2d, 2e) des Trägers bestehen Öffnungen (19), welche es der durch die Miniaturlampen (3) erhitzten Luft erlauben, zu entweichen. Dies ist insbesondere bei der Beleuchtung von temperaturempfindlichen Objekten notwendig, dient aber auch zur Senkung der Betriebstemperatur der Lampen (3) und führt so zu einer längeren Lebensdauer bei den eingesetzten Miniaturlampen (3).

Werden nur wenige Beleuchtungsrichtungen und - winkel benötigt, so können die Lichtquellen (9) in Fig. 3b auch auf Speichen (2g) angeordnet werden. Auch hierbei ist der Aufbau einer Speiche (2g) aus Ringen (18b) und Stäben (18b) aus hartem Material mit weicher Umhüllung zum Kollisionsschutz sinnvoll. Der besondere Vorteil dieser Einrichtung besteht in dem großen freien Blickfeld durch den Träger (2g) hindurch auf das beleuchtete Objekt. Die optische Achse ist mit dem Bezugszeichen 90 versehen.

Jede Lichtquelle (9) ist mit diesen elektrischen Leitungen (34) mit der Steuerschaltung (35) der Beleuchtungseinrichtung verbunden. Die Steuerschaltung (35) kann jede Lichtquelle (9) separat einschalten und ihre Lichtstärke individuell reglen. Mit der Steuerschaltung (35) ist über ein Kabel (36) ein Bedienungspult (37) verbunden, das zur Bedienung Mittel zur Ansteuerung der Lichtquellen (9) und zur Anzeige der eingeschalteten Lichtquellen (9) enthält.

Als Lichtquellen kommen auch ultrahelle Leuchtdioden in Frage. Diese zeichnen sich außer durch ihre hohe Lichtstärke auch durch eine geringe spektrale Bandbreite aus. Beispielhaft seien hier genannt

| | Power Dissipation | Peak Emission Wavelength | Spectral Bandwidth at 50% |
|---|---|---|---|
| SUR-150 (OSHINO) | 55 mW | 660 nm | 25 nm |
| TLRAI 50 (TOSHIBA) | 55 mW | 660 nm | 25 nm |
| OD-50L (OPTO DIODE CORP.) | 600 mW(P.) | 880 nm | 80 nm |
| OD-50W (OPTO DIODE CORP.) | 1000 mW(P.) | 880 nm | 80 nm |
| OD-100 (OPTO DIODE CORP.) | 1300 mW(P.) | 880 nm | 80 nm |

Diese Strahlencharakteristik wird als Grundlage für eine Korrekturrechnung der Abbildungsoptik im Mikroskoptubus genommen, um eine optimale Abbildung zu erhalten. Gleichzeitig werden auch die Glassorten zur Herstellung der Abbildungsoptik so ausgesucht, daß eine maximale Transmission im spektralen Bandbereich erfolgt. Um Umlichteinflüsse auszuschalten, ist außerdem ein Interferenz-Bandpaßfilter im Mikroskoptubus vorhanden. Dieses Filter läßt bevorzugt den von den Leuchtdioden emittierten Spektralbereich durch und schwächt die Strahlung außerhalb des ausgewählten Spektralbereiches. Die ultrahellen Leuchtdioden eignen sich insbesondere sehr gut für einen Einsatz im Zusammenhang mit einer CCD-Kamera im Strahlengang des Mikroskoptubus (1).

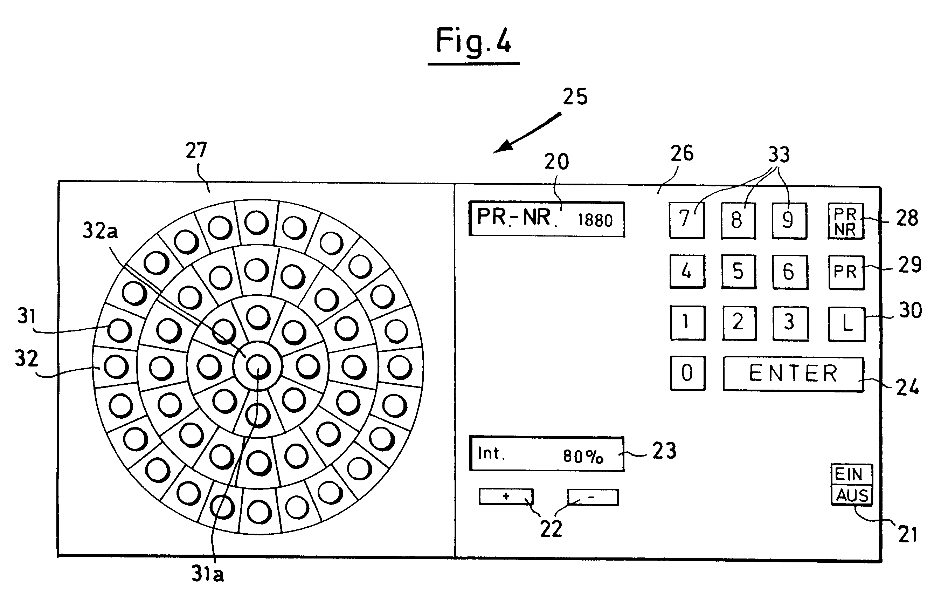

In Fig. 4 ist die Frontplatte (25) einer Ansteuereinheit für die Beleuchtungseinrichtung eines Mikroskopes gemäß Fig. 1 zu sehen. Die Ansteuereinheit selber ist in bekannter Weise gemäß dem Stand der Technik so ausgeführt, daß eine Vielzahl von Miniaturlampen angesteuert werden können und die Frontplatte (25) als Eingabe- und Anzeigeeinrichtung dient.

Die Frontplatte (25) ist unterteilt in zwei Bereiche (26, 27).

Im ersten Bereich (27) sind entsprechend der Anzahl der Miniaturlampen (3 in Fig. 1) Drucktasten (32) mit Leuchtdioden (31) kreisförmig angeordnet, wobei eine extra Drucktaste (32a) mit Leuchtdiode (31a) für Auflicht vorhanden ist. Durch Drücken der Drucktasten (32) werden die Miniaturlampen (3 in Fig. 1) angewählt und gleichzeitig ein- und ausgeschaltet. Ist eine Miniaturlampe (3) durch Drücken ihrer Drucktaste (32) eingeschaltet und angewählt, so leuchtet auf der Drucktaste (32) die Leuchtdiode (31) auf, um auf den Betrieb der Miniaturlampe (3) hinzuweisen. Gleichzeitig kann man über Plus-Minus-Tasten (22) im zweiten Bereich (26) die Leuchtstärke der Miniaturlampe (3) verändern. Diese Veränderung erfolgt um so schneller, je länger man die Tasten (2) drückt. Der eingestellte Wert der Leuchtstärke (0-100%) erscheint auf einer Anzeige (23). Druckt man mehrere Drucktasten (22) gleichzeitig oder drückt eine Drucktaste (32) konstant während man die anderen Drucktasten (32) drückt, so können danach mehrere Miniaturlampen (3) gleichzeitig in ihrer Leuchtstärke verändert werden.

Durch Anwählen einer anderen Miniaturlampe (3) durch das erneute Drücken einer Drucktaste (32) wird der eingestellte Wert in einem Speicher der Ansteuereinrichtung zwischengespeichert und die neu angewählte Miniaturlampe (3) kann in ihrer Leuchtstärke eingestellt werden, ohne daß die vorherige Einstellung beeinflußt wird. Auf diese Weise kann jede Miniaturlampe (3) einzeln oder in Gruppen in ihrer Leuchtstärke für eine Beleuchtung eingestellt werden. Will man eine Einstellung löschen, so muß man die entsprechende Drucktaste (32) drücken, wodurch die Leuchtdiode (31) ausgeht und die Miniaturlampe (3) ausgeschaltet ist. Durch erneutes Drücken dieser Drucktaste (32) schaltet man die Miniaturlampe (3) wieder ein und kann ihre Leuchtstärke über die Plus-Minus-Tasten (22) erneut einstellen.

Es besteht aber auch die Möglichkeit, mehrere Beleuchtungen nacheinander abzuspeichern und wieder aufzurufen. Dazu wird in der beschriebenen Weise eine Beleuchtung eingestellt. Ist dies geschehen, so drückt man die PR-Nr-Taste (28) und vergibt der eingestellten Beleuchtung eine Nummer mit den Zahlentasten (33). Diese für die eingestellte Beleuchtung vergebene Nummer wird auf einer Anzeige (20) angezeigt. Durch einen Druck auf die ENTER-Taste (24) erfolgt die Abspeicherung der Beleuchtungseinstellung unter der ausgewählten Nummer, wobei eine frühere Einstellung mit derselben Nummer überschrieben wird.

Diese Vorgehensweise kann mehrfach wiederholt werden und so ein Programm mit mehreren Beleuchtungseinstellungen nacheinander eingegeben werden. Will man einen Programmschritt löschen, so stellt man mit der PR-Nr-Taste (28) und den Zahlentasten (33) auf der Anzeige (20) die entsprechende Nummer ein und drückt die L-Taste (30).

Will man das Programm ablaufen lassen, so stellt man den Programmschritt ein, mit dem man beginnen möchte und drückt dann die PR-Taste (29), um die nächste Beleuchtungseinstellung mit der nächsthöheren Programmnummer zu erhalten. Auf der Frontplatte (25) befindet sich außerdem ein Ein-Aus-Schalter (21), mit welchem man die Miniaturlampen am Träger (2 in Fig. 1) und das Auflicht durch den Tubus gemeinsam ausschalten kann.

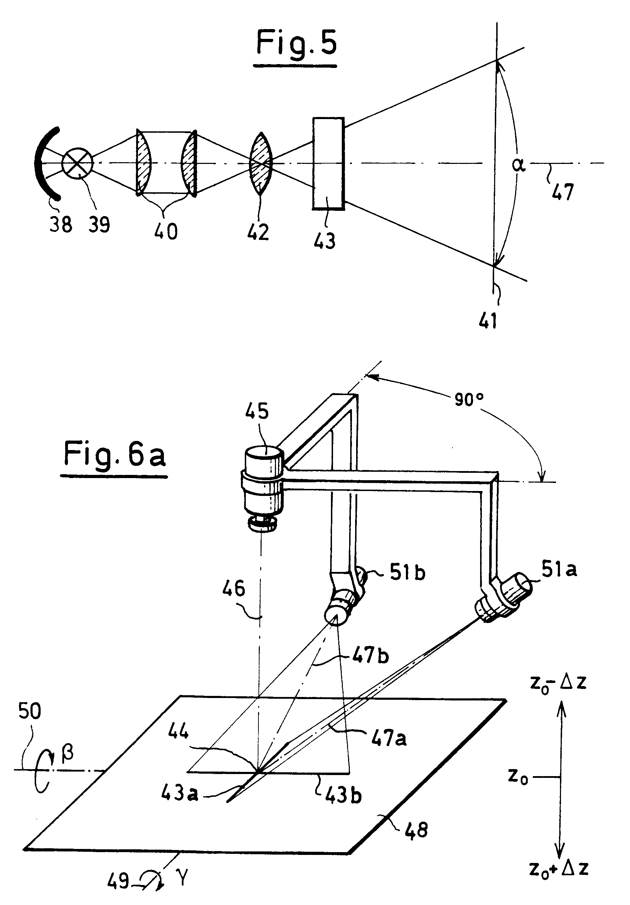

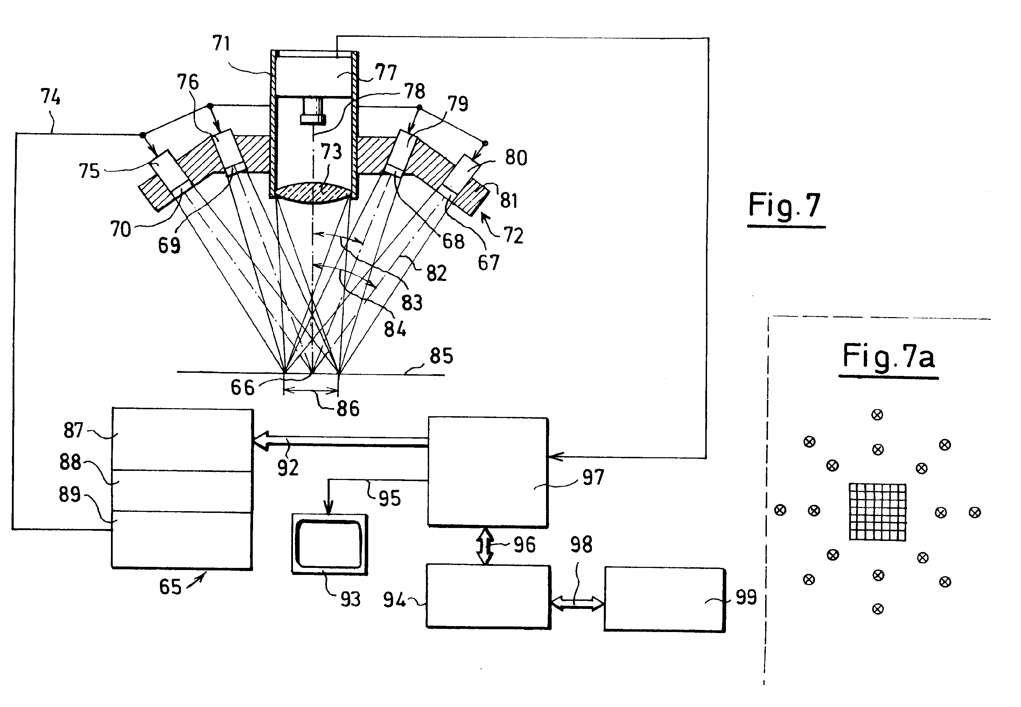

In Figur 5 ist der diskrete Aufbau einer Lichtquelle gezeigt, welche in den Figuren 6a und 7 verwendet wird. Diese Lichtquelle wird als Miniaturprojektor verwendet. Das weiße Licht eines Glühfadens (39) wird von einem als Hohlspiegel ausgebildeten Reflektor (38) auf einen aus zwei plankonvexen Linsen bestehenden Kondensor (40) gelenkt, welcher das von dem Glühfaden (39) ausgehende divergente Strahlenbüschel auf die Mitte der Projektionslinse (42) abbildet. Vor der Projektionslinse (42) befindet sich ein räumlicher Lichtmodulator (43). Es handelt sich dabei z.B. um eine, durch das Magnetfeld eines Ansteuerstroms getriggerte, zweidimensionale Eisengranat-Pixel-Struktur auf einem nichtmagnetischen, transparenten Substrat. Abhängig von der Magnetisierungsrichtung der Pixel wird die Polarisationsrichtung des durchtretenden Lichts im Uhrzeigersinn oder dagegen gedreht (Faraday-Effekt). Mit einer Polarisator-Analysator-Kombination werden so einzelne Pixel zwischen "Hell" und "Dunkel" geschaltet. Die im Lichtmodulator gespeicherte Bildinformation braucht zur Aufrechterhaltung keine Energie (Permanentspeicher). Der Lichtmodulator (43) ist als Chip mit einem Flächenarray aufgebaut (z.B. 256x256 Pixel). Die Umschaltdauer pro Pixel liegt unter 1 $\mu$ Sekunde. Damit läßt sich die Lichtquelle sehr schnell aus- und einschalten, ohne daß der Strom durch den Glühfaden (39) verändert werden muß. Außerdem kann man mit dieser Anordnung sehr leicht sehr schnell ein für eine optische Vermessung benötigtes Linienmuster oder eine diskrete Linie auf die Projektionsebene (41) abbilden.

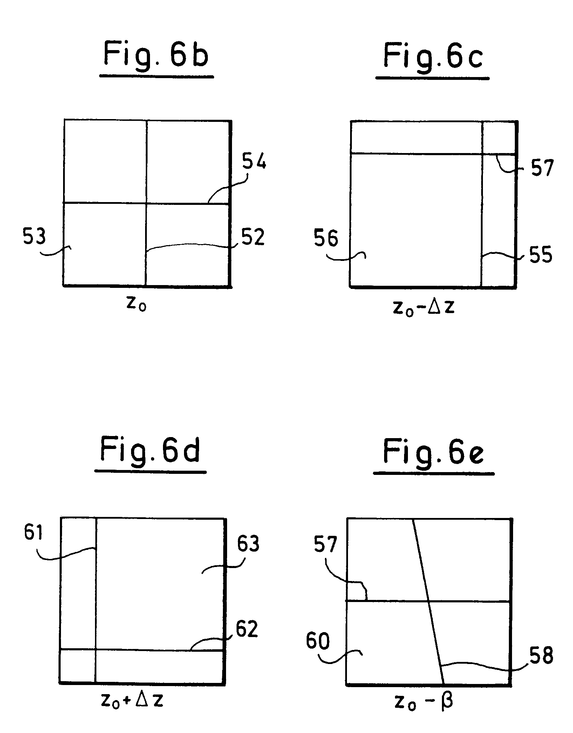

Baut man zwei dieser Lichtquellen (51a und 51b) gemäß Figur 5 in eine Beleuchtungseinrichtung an einen optischen Tastkopf (45) einer Meßmaschine an, so kann man z.B. ein Fadenkreuz auf einer Meßebene (48) erzeugen. Dies ist in Figur 6a gezeigt. Die Meßprojektoren (51a und 51b) sind dabei auf einer Ebene senkrecht zur optischen Achse (46) des optischen Tastkopfes (45) um einen Winkel von 90° versetzt. Die optischen Achsen (47a und 47b) der Lichtquellen (51a und 51b) schneiden die optische Achse (46) des optischen Tastkopfes (45) dabei in einem Punkt (44). Wenn die Meßebene (48) genau senkrecht zur optischen Achse (46) des Tastkopfes (45) orientiert ist, treffen sich die beiden Linien (43a und 43b) der Lichtquellen (51a und 51b) genau in diesem Punkt (44) und bilden ein gleichschenkliges Kreuz, zwischen dessen Linien (43a und 43b) jeweils ein Winkel von 90° vorhanden ist. Ein anderer Winkel tritt nur dann auf, wenn die Meßebene (48) um einen Winkel $\beta$ oder $\gamma$ der x-(50) oder y-(49)-Richtung gekippt ist. Dabei ist die z-Richtung durch die optische Achse (46) des optischen Tastkopfes (45) festgelegt. In den Figuren 6c-6e ist gezeigt, welches Bild sich für den Tastkopf (45) ergibt, wenn er sich bezüglich seiner Meßebene (48) nicht genau in der optimalen Ebene befindet. Alle Orientierungen der Linien orientieren sich an einer Anordnung gemäß Figur 6a.

In Figur 6b ist noch einmal das Bild gezeigt, das durch die beiden Meßprojektoren auf die Meßebene im Abstand z vom Tastkopf (bei $\beta,\gamma = 0°$) projiziert wird. Die beiden von den Meßprojektoren erzeugten Linien

7

(52,54) treffen sich dann genau in der Mitte des erfaßten Bildausschnittes. Das Bild gemäß Figur 6c ist gegeben, wenn die Meßebene (56) zu nahe ist. Dann beträgt der Abstand zwischen Meßebene (56) und optischen Tastkopf nicht mehr z, sondern z-$\Delta$z.

Die beiden projizierten Linien (55,57) wandern gemeinsam um den selben Betrag versetzt in eine Ecke des erfaßten Bildausschnittes. Bei z + z erhält man das in Figur 6d gezeigte Bild der Meßebene (63). Die beiden projizierten Linien (61,62) wandern dabei gemeinsam um den selben Betrag versetzt in die gegenüberliegende Ecke des erfaßten Bildausschnittes.

In Fig. 6e ist noch gezeigt, welches Bild der Meßebene (60) entsteht, wenn man die Meßebene um den Winkel $\beta$ verkippt. Dann bleibt die eine projizierte Linie (57) in der Grundstellung, während die andere projizierte Linie (58) einen gegenüber der ersten Linie (57) schrägen Verlauf bekommt. Entsprechendes gilt bei einer Verkippung der Meßebene um den Winkel $\gamma$ bzw. bei einer Kombination der gezeigten Orientierungen der Meßebene.

In Figur 7 ist eine Beleuchtungseinrichtung (72) an einen optischen Tastkopf (71) einer Meßmaschine angebracht. Dieser Tastkopf (71) enthält eine CCD-Kamera (77) und ein Objektiv (73). Das Sehfeld (86) um die optische Achse (78) des Tastkopfes (71) wird von Lichtquellen (75,76,79,80) ausgeleuchtet, welche den Tastkopf (71) in zwei konzentrischen Kreisen umgeben. Die Lichtquellen (75,76,79,80) strahlen ihr Licht unter verschiedenen Winkeln (83,84) in das Sehfeld (86) ab, so daß es bei 3-dimensionalen Objekten zu einem unterschiedlichen Schattenwurf kommt, wenn entweder nur Lichtquellen (76,79) am inneren Kreis oder nur Lichtquellen (75,80) am äußeren Kreis leuchten. Damit es nicht durch bestimmte Lichtquellen (75,76,79,80) zu einer Totalreflexion in Richtung auf die CCD-Kamera (77) kommt, kann jede Lichtquelle (75,76,79,80) einzeln in ihrer Intensität eingestellt werden. Alle Lichtquellen (75,76,79,80) werden von einem Träger (81) gehalten, welcher an dem optischen Tastkopf (71) lösbar befestigt ist. Damit alle Lichtquellen (75,76,79,80) bei gleicher konstruktiver Auslegung dieselbe Lichtintensität in dem Sehfeld (86) erzeugen können und denselben Bereich ausleuchten, ist der Träger (72) so geformt, daß die Lichtquellen (75,76,79,80) sich alle auf einer Kugelschale um den Schnittpunkt (66) befinden. Jeder Kreis von Lichtquellen (75,79 und 76,80) besteht aus insgesamt acht Lichtquellen (75,76,79,80 in der Figur zu sehen), welche jeweils einen Abstand von 45° voneinander haben und entsprechen dem geometrischen Aufbau des CCD-Flächensensors in der CCD-Kamera (77) ausgerichtet sind. Diese Ausrichtung ist schematisch in Figur 7a gezeigt, wo um den CCD-Flächensensor in zwei Kreisen jeweils acht Lichtquellen angeordnet sind. Die Anordnung wurde entsprechent Figur 7a gewählt, da diese Art der Beleuchtung für den Sobel-Algorithmus für die Kantendetektion bei der Bildauswertung die besten Ergebnisse liefert. Die optischen Achsen (82) der Lichtquellen (75,76,79,80) schneiden sich alle in einem Punkt (66) auf der optischen Achse (78) des Tastkopfes (71). Liegt dieser Punkt (66) auf der Objektebene (85), so wird ein scharfes Bild der Objektebene (85) auf die CCD-Kamera (77) abgebildet.

Vor den Lichtquellen (75,76,79,80) befindet sich jeweils ein ansteuerbarer Lichtmodulator (67,68,69,70), welcher ein Muster aus einer Pixelmatrix (512x512) erzeugen kann.

Über eine Datenleitung (91) gelangen die Videosignale der CCD-Kamera (77) in die Bildverarbeitungsanlage (97). Dort werden die Videosignale digitalisiert und gelangen dann in den Bildspeicher. Die Bildverarbeitungsanlage (97) ist mit einem Datenbus (96) mit dem Steuerschrank (94) der Meßmaschine verbunden, welcher wiederum mit einem Datenbus (98) mit dem Host-Rechner (99) verbunden ist. Alle zur Bildverarbeitung notwendigen Rechenoperationen erfolgen in der Bildverarbeitungsanlage (97). Der Steuerschrank (94) dient zur Steuerung aller mit der Meßmaschine zusammenhängenden Parameter. Über den Host-Rechner (99) hat der Bediener der Meßmaschine Zugriff auf den Steuerschrank (94) und auf die Bildverarbeitungsanlage (97). Der Host-Rechner (99) dient zur Einstellung und Festlegung aller für den Meßprozeß an einem individuellen Meßgegenstand notwendigen Parameter. Die von der Bildverarbeitungsanlage (97) ermittelten Werte werden mit dem Bild der Objektoberfläche (85) auf einem Bildmonitor (93) dem Bediener der Meßmaschine sichtbar gemacht, welcher mit einer Signalleitung (95) mit der Bildverarbeitungsanlage (97) verbunden ist. Mit der Bildverarbeitungsanlage (97) ist über einen Datenbus (92) das Beleuchtungssteuerungsmodul (65) verbunden. Das Beleuchtungssteuerungsmodul (65) besteht aus einem Projektionsmode-Speicher (87), in welchem die verschiedenen Parametereinstellungen für jede Beleuchtungseinstellung abgespeichert sind. Diese Parameter umfassen die jeweilige Leuchtstärke für jede Lichtquelle (75,76,79,80) für jede Beleuchtungsszene. Außerdem sind die verschiedenen Einstellungen der einzelnen Lichtmodulatoren (67,68,69,70) für jede Beleuchtungsszene abgespeichert. Je nach Vorgabe durch die Bildverarbeitungsanlage (97) werden die diskreten digitalisierten Parameter im Projektionsmode-Speicher (87) aufgerufen und über einen D/A-Konverter (88) an die Beleuchtungssteuerelektronik (89) weitergegeben. Die Beleuchtungssteuerelektronik (89) ist so ausgelegt, daß sie jede einzelne Lichtquelle (75,76,79,80) und jeden einzelnen Lichtmodulator (67,68,69,70) einzeln über ein Leitungskabel (74) entsprechend den von der Bildverarbeitungsanlage (97) vorgegebenen Parametern diskret einstellen kann.

**Patentansprüche**

1. Beobachtungsgerät mit einer Auflicht-Beleuchtungseinrichtung bestehend aus mehreren einzelnen Lichtquellen (3,9,75-80,100), die in einem mehrdimensionalen Array angeordnet sind, durch dessen Zentrum die optische Achse (10,46,78,90) der Abbildungsoptik des Beobachtungsgeräts geht, und die mit Mitteln (25,35,65) zur individuellen Ansteuerung bzw. Regelung der Intensität jeder der Lichtquellen oder auswählbarer Gruppen von Lichtquellen verbunden sind, wobei die Lichtquellen außerhalb des Abbildungsstrahlenganges der Abbildungsoptik (1,73) angeordnet und mit ihren Strahlachsen (6a-f;47a,b;82) unter mehreren verschiedenen Winkeln gegen die optische Achse der Abbildungsoptik geneigt sind, und daß die Mittel zur Ansteuerung bzw. Regelung eine Speichereinheit (87) enthalten, in der unterschiedliche Einstellungen der Intensitäten der einzelnen Lichtquellen oder der Gruppen von Lichtquellen speicherbar sind.

2. Beobachtungsgerät nach Anspruch 1, wobei im Strahlengang der Lichtquellen (3,100,9,75-80) mehrere elektronisch ansteuerbare räumliche Lichtmodulatoren (43,51a+b) angeordnet sind.

3. Beobachtungsgerät nach Anspruch 2, wobei innerhalb des Arrays mehrere zur optischen Achse (10,46,78,90) des Abbildungssystems symmetrisch verteilte räumliche Lichtmodulatoren (43,51a+b) angeordnet und als Lichtstrukturprojektoren ausgebildet sind.

4. Beobachtungsgerät nach Anspruch 3, wobei die auf das Objekt (7) von den Lichtstrukturprojektoren (43,51a+b) abgebildeten Lichtstrukturen objektspezifisch auswählbar sind.

5. Beobachtungsgerät nach einem der Ansprüche 1 - 4, wobei die Einzellichtquellen (3,100,9,75-80) Miniaturhalogenlampen (3b) sind.

6. Beobachtungsgerät nach einem der Ansprüche 1 - 5, wobei die Einzellichtquellen (3,100,9,75-80) an der Innenseite eines halbkugelförmigen Trägers (2,109,81,2c-g) befestigt sind.

7. Beobachtungsgerät nach Anspruch 6, wobei der Mittelpunkt des Innenradius des Trägers (2,109,81,2,2c-g) in oder in der Nähe der Objektebene (5,48,85) einer mit der Beleuchtungseinrichtung verbundenen Abbildungsoptik liegt.

8. Beobachtungsgerät nach einem der Ansprüche 1 - 7, mit einem mit der Beleuchtungseinrichtung verbundenem Bedienpult (37), das Mittel zur Ansteuerung der Beleuchtungseinrichtung enthält.

9. Beobachtungsgerät nach einem der Ansprüche 1 - 8, wobei die Ansteuerung und Regelung der Lichtquellen (3,100,9,75-80) und/oder Lichtstrukturprojektoren (43,51a+b) durch eine wissensbasierende Bildverarbeitungsanlage (97) im geschlossenen Regelkreis erfolgt, wobei messergebnisverfälschende Objektflächeneigenschaften in der Bildverarbeitungsanlage (97) eliminiert werden können.

10. Beobachtungsgerät nach einem der Ansprüche 1 - 9, wobei die Lichtquellen (3,100,9,75-80) und die Strukturprojektoren (43,51a+b) in den Ebenen senkrecht zur optischen Achse (10,46,78,90) so angeordnet sind, daß eine Anpaßbarkeit an verschiedene Bildverarbeitungsalgorithmen möglich ist.

11. Beobachtungsgerät nach einem der Ansprüche 1 - 10, wobei aus mindestens zwei Lichtstrukturprojektoren (43,51a+b) eine aktive Autofokuseinrichtung aufgebaut ist, die eine z-Führungsgröße für ein z-Stellglied erzeugt.

**Claims**

1. A viewing device comprising an illuminating arrangement for incident light, the illuminating arrangement having a plurality of individual light sources (3,9,75-80, 100) arranged in a multi-dimensional array defining a geometric array center coincident with the optical axis (10,46,78,90) of the viewing device and connected with means (25,35,65) for controlling the intensity of each of said light sources or elected groups of light sources individually, said light sources being arranged outside the imaging ray path of the imaging optics (1,73) and being inclined under different angles against the optical axis of the imaging optics, whereas said means for controlling further comprises a storage unit (87), in which different settings of the intensities of the individual light sources or groups of light sources can be stored.

2. The viewing device of claim 1, further comprising a plurality of spatial light modulators (43,51a+b) arranged in the ray path of said light sources (3,100,9,75-80).

3. The viewing device of claim 2, comprising a plurality of spatial light modulators (43,51a+b) being arranged symmetrically with respect to the optical axis (10,46,78,90) of the imaging system, each one of said light modulators being a light structure projector.

4. The viewing device of claim 3, characterized in that each of the light structures imaged on the object by said light structure projectors (43,51a+b) is selectable so as to be specifically according to the object.

5. The viewing device according to one of said claims 1-4, said individual light sources (3,100,9,75-80) being respective miniature halogen lamps (3b).

6. The viewing device according to one of said claims 1-5, said individual light sources (3,100,9,75-80) being fixedly mounted on the inner side of a hemispherically-shaped carrier (2,109,81,2c-g).

7. The viewing device of claim 6, wherein the center of the inner radius of said carrier (2,109,81,2c-g) is in or near the object plane (5,48,85) of an imaging optics connected to said illuminating arrangement.

8. The viewing device according to one of claims 1-7, further comprising an operating console (37) which is connected to said illuminating arrangement and includes means for controlling said illuminating arrangement.

9. The viewing arrangement according to one of said claims 1-8, said control means including a knowledge-based image processing unit (97) connected to said light sources and/or to said light structure projectors (43,51a+b) in a closed control loop for controlling the respective intensities thereof, whereby surface characteristics of the object which falsify measurement results can be eliminated.

10. The viewing device according to one of said claims 1-9, said light sources (3,100,9,75-80) and said light structure projectors (43,51a+b) being arranged in planes perpendicular to said optical axis (10,46,78,90) and being disposed so as to permit an adaptation to different image processing algorithms.

11. The viewing device of one of said claims 1-10, said device including an active automatic focusing arrangement incorporating at least two of said light structure projectors (43,51a+b) and generating a z-guide variable for a z-actuator.

**Revendications**

1. Appareil d'observation doté d'un dispositif d'éclairage en lumière réfléchie composé de plusieurs sources de lumière individuelles (3, 9, 75-80, 100) qui forment un groupe régulier multidimensionnel dont le centre coïncide avec l'axe optique (10, 46, 78, 90) de l'optique de reproduction dudit appareil d'observation et qui sont associées à des moyens (25, 35, 65) de réglage individuel de l'intensité de chacune des sources de lumière ou de groupes sélectionnés de sources de lumière, caractérisé en ce que les sources de lumière sont disposées hors du faisceau de reproduction de l'optique de reproduction (1, 73), que les axes de leurs faisceaux d'éclairage présentent des angles d'inclinaison variés par rapport à l'axe optique de l'optique de reproduction et que les moyens de réglage comprennent une mémoire (87) permettant d'enregistrer les réglages d'intensité les plus variés pour les différentes sources de lumière ou les différents groupes de sources de lumière.

2. Appareil d'observation selon la revendication 1, caractérisé en ce que plusieurs modulateurs de lumière à effet spatial (43, 51a+b), commandés par voie électronique, sont disposés dans le trajet lumineux des sources de lumière (3,100, 9, 75-80).

3. Appareil d'observation selon la revendication 2, caractérisé en ce que plusieurs modulateurs de lumière à effet spatial (43, 51a+b) présentant une distribution symétrique par rapport à l'axe optique (10, 46, 78, 90) du système de reproduction sont disposés à l'intérieur du groupe de sources de lumière et exécutés sous forme de projecteurs de structures lumineuses.

4. Appareil d'observation selon la revendication 3, caractérisé en ce que les structures lumineuses reproduites par les projecteurs (43, 51a+b) sur l'objet (7) peuvent être sélectionnées spécifiquement en fonction de l'objet.

5. Appareil d'observation selon l'une des revendications 1 - 4, caractérisé en ce que les sources de lumière individuelles (3,100, 9, 75-80) sont des lampes halogènes miniaturisées (3b).

6. Appareil d'observation selon les revendications 1 - 5, caractérisé en ce que les sources de lumière individuelles (3,100, 9, 75-80) sont fixées sur la face intérieure d'un support hémisphérique (2,109, 81, 2c-g).

7. Appareil d'observation selon la revendication 6, caractérisé en ce que le centre du rayon interne du support (2, 109, 81, 2, 2c-g) coïncide avec ou se trouve à proximité du plan d'objet (5, 48, 85) d'une optique de reproduction associée au dispositif d'éclairage.

8. Appareil d'observation selon l'une des revendications 1 - 7, équipé d'un pupitre de commande (37) qui est relié au dispositif d'éclairage et qui comprend des moyens de commande dudit dispositif d'éclairage.

9. Appareil d'observation selon l'une des revendications 1 - 8, caractérisé en ce que la commande et le réglage des sources de lumière (3,100, 9, 75-80) et/ou des projecteurs de structures lumineuses (43, 51a+b) sont assurés, en boucle d'asservissement fermée, par un système intelligent de traitement d'images (97) qui permet d'éliminer les caractéristiques des surfaces de l'objet susceptibles de fausser le résultat de la mesure.

10. Appareil d'observation selon l'une des revendications 1 - 9, caractérisé en ce que les sources de lumière (3,100, 9, 75-80) et les projecteurs de structures (43, 51a+b) sont disposés dans les plans perpendiculaires à l'axe optique (10, 46, 78, 90), de manière à ce que l'adaptation à différents algorithmes de traitement d'images soit possible.

11. Appareil d'observation selon l'une des revendications 1 - 10, caractérisé en ce qu'au moins deux projecteurs de structures lumineuses (43, 51a+b) forment un dispositif autofocus actif qui produit une grandeur de référence z agissant sur un organe de réglage en z.

Fig.1

Fig.2a

Fig.2b

Fig. 3a

Fig. 3b

# Fig.4

PR.- NR.   1880

7   8   9   PR NR   28

4   5   6   PR   29

1   2   3   L   30

0   ENTER   24

Int.   80%   23

+   -

22

EIN AUS   21

EP 0 385 262 B1

Fig.5

Fig.6a

Fig. 6b

Fig. 6c

Fig. 6d

Fig. 6e

Fig.7

Fig.7a

EP 0 385 262 B1